# EUROPÄISCHE PATENTSCHRIFT

(11) **EP 0 701 540 B1**
(45) Veröffentlichungstag und Bekanntmachung des Hinweises auf die Patenterteilung: **19.07.2000**
(21) Anmeldenummer: 95914290.2
(22) Anmeldetag: 22.03.1995
(51) Int. Cl.: C04B 26/16, C08J 9/00

(54) **FLAMMWIDRIGER POLYHARNSTOFF-SCHAUM**
FLAME-RESISTANT POLYCARBAMIDE FOAM
MOUSSE DE POLYCARBAMIDE RESISTANT A LA FLAMME

(30) Priorität: 25.03.1994 DE 4410378
(43) Veröffentlichungstag der Anmeldung: 20.03.1996
(73) Patentinhaber: PREFORM RAUMGLIEDERUNGSSYSTEME GmbH, 91552 Feuchtwangen (DE)
(72) Erfinder: STAENDEKE, Horst, D-53797 Lohmar (DE); LAGODA, Reinhold, D-91599 Kaierberg (DE)
(74) Vertreter: Pfenning, Meinig & Partner
(86) Internationale Anmeldenummer: EP9501073
(87) Internationale Veröffentlichungsnummer: WO9526322

(56) Entgegenhaltungen:
- EP-A- 0 088 950
- EP-A- 0 093 392
- WO-A-93/08142
- WO-A-93/22253
- DE-C- 3 909 083
- US-A- 4 504 603
- DATABASE WPI Week 8302 Derwent Publications Ltd., London, GB; AN 83-04027k & SU,A,910 678 (HALURGY RESEARCH IN)

## Beschreibung

Die Erfindung betrifft flammwidrigen Polyharnstoff- Schaum, ein Verfahren zu seiner Herstellung und seine Verwendung.

Aus der DE 39 09 083 C1 ist ein Gipsschaumstoff mit poriger Struktur, enthaltend einen Polyharnstoff, bekannt, der ein Raumgewicht von 100 bis 400 kg/m³ besitzt, offenzellig ist und als Polyharnstoff das Kondensationsprodukt aus Diphenylmethan-4,4'-diisocyanat-Präpolymeren und Wasser enthält. Der Gipsschaumstoff soll als Schall- und/oder Wärmedämmstoff eingesetzt werden.

Nachteilig ist dabei, daß von hydraulisch abbindendem Calciumsulfat-Semihydrat (α-Gips; CaSO₄ x 1/2 H₂0) ausgegangen werden soll, weil für dessen Herstellung durch Dehydratisierung von Calciumsulfat-Dihydrat erhebliche Energiemengen aufgewendet werden müssen. Beim Nacharbeiten des Standes der Technik (DE 39 09 083 C1, Beispiele 1 und 2) wurden Gipsmaterialien mit einem Raumgewicht von über 1000 kg/m³ erhalten, so daß der für den wichtigsten Anwendungssektor (Wärmedämmung, Akustik) interessante Raumgewichtsbereich von weniger als 100 kg/m³ (= < 0,1 g/cm³) nicht erreicht wird. Ausserdem scheiden derartige Materialien für den Anwendungsbereich Schallabsorption aus, weil keine Zellstruktur vorhanden ist. Ebenfalls fehlen Hinweise darauf, ob und ggf. wie die beschriebenen Gips-"Schäume" flammwidrig eingestellt werden können, was eine unabdingbare Voraussetzung für deren Verwendung als Baustoffe für die Wärmedammung und Schallabsorption ist. Das angegebene Verfahren dürfte nur schwerlich in den technischen Maßstab übertragbar sein, weil die nach dem Stand der Technik (DE 39 09 083 C1, Beispiele 1 und 2) erhaltenen Mischungen eine mörtelähnliche Konsistenz aufweisen.

Überraschenderweise lassen sich diese Probleme lösen, wenn man erfindungsgemäß von Calciumsulfat-Dihydrat ausgeht, durch Verwendung größerer Anteile an Wasser und Präpolymeren des Diphenylmethan-4,4'-diisocyanats dafür sorgt, daß die Mischungen der Ausgangskomponenten pump- oder gießfähig sind und als Flammschutzmittel Ammoniumpolyphosphat einsetzt.

So gelang es, durch Zusatz von Ammoniumpolyphosphat offenzellige und leichte (Raumgewicht: < 100 kg/m³) Polyharnstoffschäume herzustellen, die die Anforderungen der Baustoffklasse DIN 4102-B2 erfüllten, wenn das Raumgewicht über 35 kg/m³ und der Gipsanteil über 30 Masse-% lagen.
Ferner gelang es erstmalig, durch Zusatz von Ammoniumpolyphosphat offenzellige, leichte (Raumgewicht: < 100 kg/m³) und schwerentflammbare Polyharnstoffschäume herzustellen, die die Anforderungen der Baustoffklasse DIN 4102-B1 erfüllten. Dies war deswegen überraschend und nicht vorhersehbar, weil mit sinkendem Raumgewicht der Anteil an nicht brennbarem anorganischem Füllstoff zurückgenommen und in gleichem Maße der Anteil an brennbarem Polyharnstoff angehoben werden muß.

Ein sehr wichtiger Nebeneffekt der Verwendung von Ammoniumpolyphosphat als Flammschutzmittel ist die bessere Einbindung des Gipses in den Polyharnstoffschaum. Während ein gipsgefüllter Polyharnstoffschaum, der ohne Verwendung von Ammoniumpolyphosphat hergestellt wurde, bei der Verarbeitung unter partiellem Verlust des pulvrigen Gipses stark staubt, unterbleibt das Stauben bei den erfindungsgemäßen Polyharnstoffschäumen bereits bei geringen Einsatzmengen an Ammoniumpolyphosphat.

Im einzelnen betrifft die Erfindung nunmehr einen flammwidrigen Polyharnstoff-Schaum, der dadurch gekennzeichnet ist, daß
- er Calciumsulfat-Dihydrat enthält.
- er als Flammschutzmittel Ammoniumpolyphosphat, ggf. in Kombination mit weiteren halogenfreien Flammschutzmitteln und/oder halogenfreien Synergisten enthält,
- sein Raumgewicht 25 bis 250 kg/m³ beträgt.
- die Zahl seiner offenen Zeilen über 80 % seiner gesamten Zellen beträgt.
- der Polyharnstoff aus einer Reaktion von Präpolymeren des Diphenylmethan-4,4'-diisocyanats mit Wasser gebildet worden ist.

Der Polyharnstoff-Schaum der Erfindung kann bevorzugt und wahlweise weiterhin dadurch gekennzeichnet sein, daß
1. er Calciumsulfat-Dihydrat in Form von Naturgips oder Chemiegips (z.B. aus der Rauchgasentschwefelung von Kraftwerken) enthält;
2. er als Flammschutzmittel ein freifließendes, pulverförmiges, in Wasser schwerlösliches Ammoniumpolyphosphat der Formel (NH₄PO₃)ₙ mit n = 20 bis 1000, vorzugsweise 500 bis 1000, enthält;
3. das Ammoniumpolyphosphat mikroverkapselt ist und 0,5 bis 25 Masse-% eines wasserunlöslichen, ggf. gehärteten Kunstharzes, welches die einzelnen Ammoniumpolyphosphatteilchen umhüllt, enthält;
4. sein Raumgewicht 35 bis 90 kg/m³ beträgt;
5. seine Zusammensetzung wie folgt ist (Masse-%):
   - a) 15 bis 70 %,: vorzugsweise 20 bis 60 %, Polyharnstoff,
   - b) 25 bis 80 %,: vorzugsweise 30 bis 70 %, Calciumsulfat-Dihydrat,
   - c) 1 bis 15 %,: vorzugsweise 2 bis 10 %, Flammschutzmittel,
   und gegebenenfalls
   - d) 0,1 bis 5 %,: vorzugsweise 0,2 bis 2 %, faserförmige Füllstoffe,
   - e) 0,1 bis 2 %: Katalysatoren auf Basis von Stickstoffverbindungen für die Isocyanat/Wasser-Reaktion,
   - f) 0,1 bis 2 %: Schaumstabilisatoren auf Basis von Polysiloxanen,
   - g) 0,01 bis 2 %: Hilfsmittel für die Dispergierung und/oder Suspendierung und/oder Thixotropierung.

Die Erfindung betrifft weiterhin ein Verfahren zur Herstellung des neuen Polyharnstoff-Schaums, welches dadurch gekennzeichnet ist, daß man Calciumsulfat-Dihydrat, Flammschutzmittel, Präpolymere des Diphenylmethan-4,4'-diisocyanats, Wasser und ggf. faserförmige Füllstoffe, Katalysatoren, Schaumstabilisatoren sowie Dispergier- und/oder Suspendier- und/oder Thixotropierhilfsmittel vermischt, wobei infolge Bildung von Kohlendioxid die Verschäumung abläuft, und daß man den ausgehärteten Schaum auf einen Restfeuchtegehalt von unter 2 % bringt.

Der erfindungsgemäße Verfahrensschritt der Entfernung der Feuchtigkeit des füllstoffhaltigen Polyharnstoffschaums ist unverzichtbar, weil der nach Beendigung der Schäumreaktion erhaltene Polyharnstoffschaum eine weichschaumartige Charakteristik aufweist, die erst durch den Trocknungsschritt, bei dem ein Gewichtsverlust von 20 - 30 % auftritt, verlorengeht. Mit diesem Trocknungsschritt nimmt der Polyharnstoffschaum eine Hartschaumstruktur mit entsprechenden Werten für die mechanische Festigkeit an.

Die faserförmigen Füllstoffe dienen der Verbesserung der mechanischen Festigkeit des Polyharnstoffschaums; es können anorganische (z.B. Glasfasern) oder organische (z.B. Zellstoffasern aus Altpapier) Fasermaterialien eingesetzt werden.

Das Verfahren der Erfindung kann bevorzugt weiterhin dadurch gekennzeichnet sein, daß man
- 15 bis 60 Masse-%: Calciumsulfat-Dihydrat,
- 15 bis 45 Masse-%: Präpolymere des Diphenylmethan-4,4'-diisocyanats,
- 25 bis 50 Masse-%: Wasser,
- 0,5 bis 10 Masse-%: Flammschutzmittel,
und gegebenenfalls
- 0,1 bis 5 Masse-%: faserförmige Füllstoffe,
- 0,1 bis 2 Masse-%: Katalysatoren auf Basis von Stickstoffverbindungen für die Isocyanat/Wasser-Reaktion,
- 0,1 bis 2 Masse-%: Schaumstabilisatoren auf Basis von Polysiloxanen und
- 0,01 bis 2 Masse-%: Dispergier- und/oder Suspendier- und/oder Thixotropierhilfsmittel vermischt.

Schließlich betrifft die Erfindung die Verwendung des neuen Polyharnstoff-Schaums als Blockschaum oder Ortschaum für Schall- und/oder Wärmedämmungen.

Der genannte Blockschaum dient z.B. zur Herstellung von Akustikplatten. Wärmeisolierplatten, Verbundplatten oder von Formteilen, beispielsweise von durch Fräsen hergestellten Isolationsschalen für Rohre oder Apparate, oder als Dämmstoffgranulat für lose Schüttungen.

### Beispiele

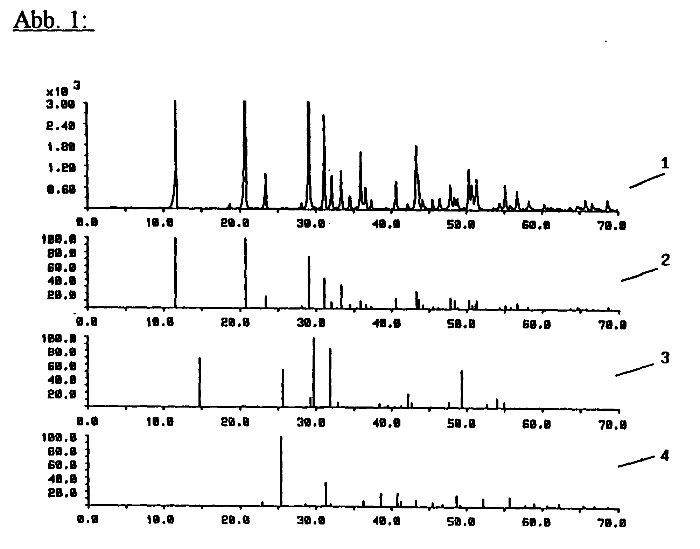

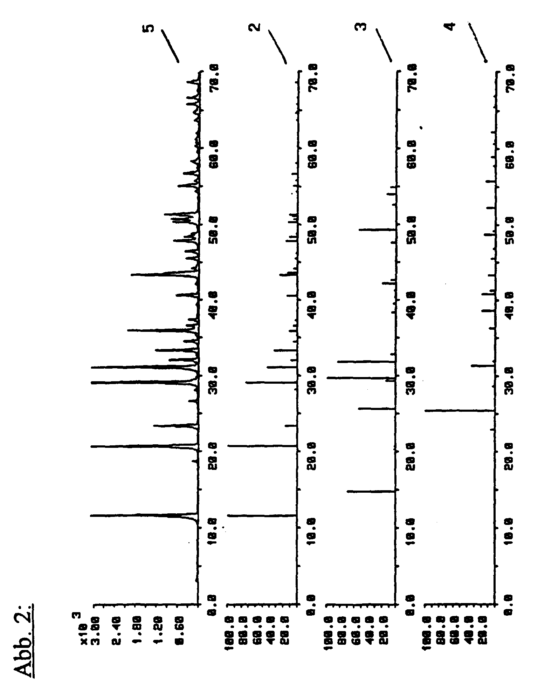

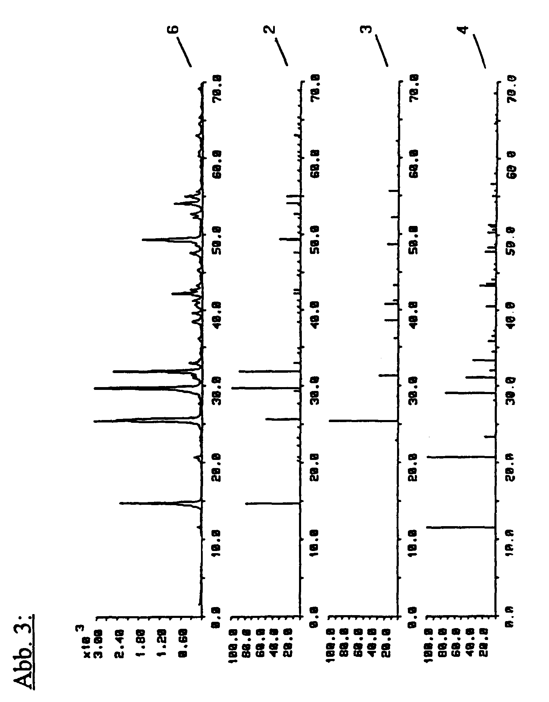

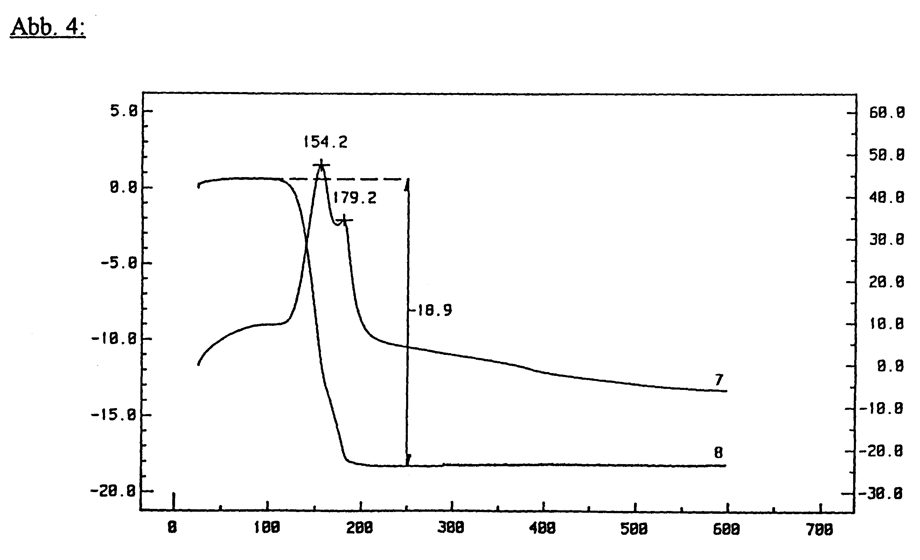

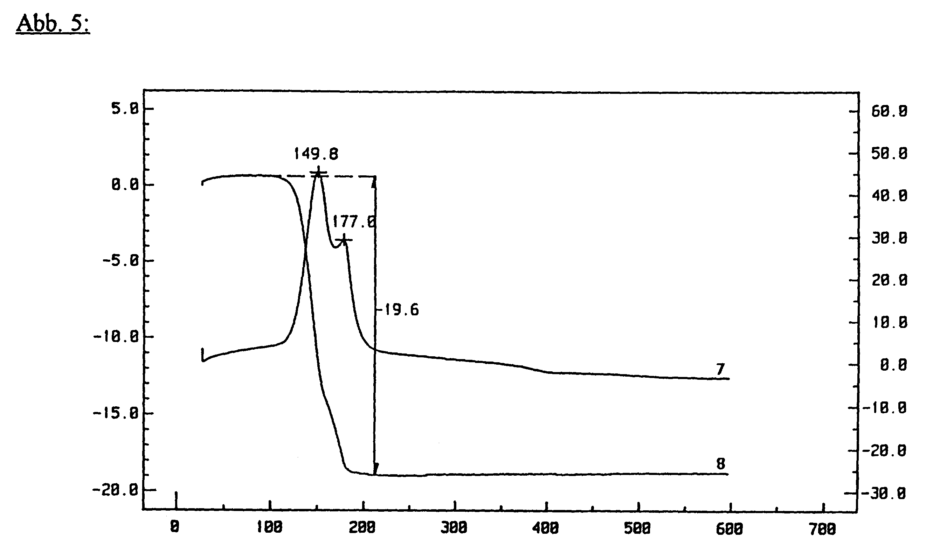

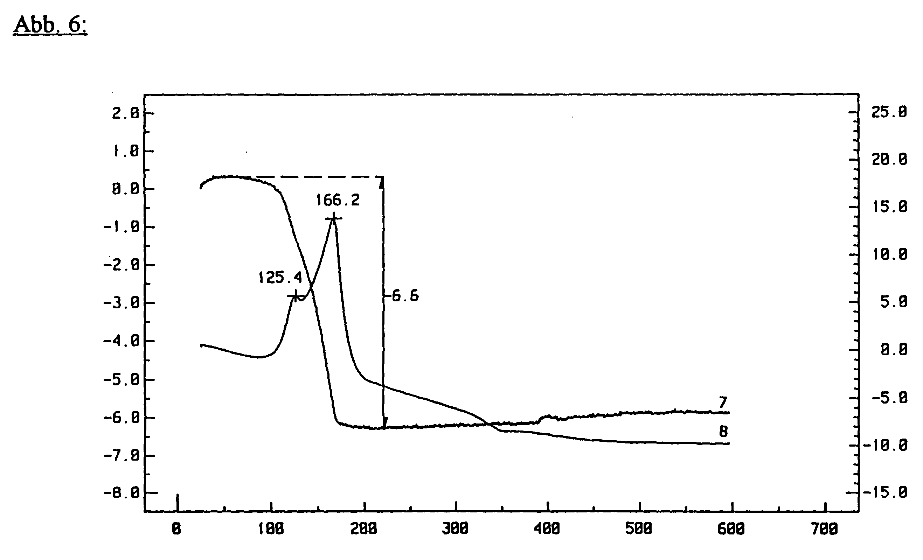

Bei den nachfolgenden Beispielen wurden folgende Einsatzstoffe verwandt:
- Calciumsulfat-Dihydrat (REA-Gips F)
   Es wurde Gips aus der Rauchgasentschwefelungsanlage des Kraftwerks Frauenaurach eingesetzt, der eine mittlere Teilchengröße von 0,030 mm aufwies und dessen Röntgenanalyse (siehe Abb. 1) ergab, daß es sich um Calciumsulfat-Dihydrat mit Gehalten an Calciumsulfat-Semihydrat bzw. Calciumsulfat-Anhydrit von höchstens 1 % handelt. Dies bestätigt auch die thermogravimetrische Untersuchung (siehe Abb. 4).
- Calciumsulfat-Dihydrat (REA-Gips H)
   Es wurde Gips aus der Rauchgasentschwefelungsanlage des Kraftwerks Heilbronn eingesetzt, der eine mittlere Teilchengröße von 0,028 mm aufwies und dessen Röntgenanalyse (siehe Abb. 2) ergab, daß es sich um Calciumsulfat-Dihydrat mit Gehalten an Calciumsulfat-Semihydrat bzw. Calciumsulfat-Anhydrit von höchstens 1 % handelt. Dies bestätigt auch die thermogravimetrische Untersuchung (siehe Abb. 5).
- Calciumsulfat-Semihydrat
   Stuckgips der Fa. Gebr. Knauf, Werk Neuss, dessen Röntgenanalyse (siehe Abb. 3) ergab, daß es sich um Calciumsulfat-Semihydrat mit geringen Gehalten an Calciumsulfat-Dihydrat und Calciumsulfat-Anhydrit handelt. Dies bestätigt auch die thermogravimetrische Untersuchung (siehe Abb. 6).
- ®Sapogenat T-040 (Hoechst AG, Frankfurt/Main)
   dieser Tributylphenolpolyglykolether (mit 4 Mol Ethylenoxid) ist eine Flüssigkeit mit einer Dichte von 0,97 g/ml (bei 50 °C) und einer Viskosität von 40 - 60 mPa.s (bei 50 °C).
- ®Hostaflam AB 462 (Hoechst AG, Frankfurt/Main)
   ein mikroverkapseltes langkettiges Ammoniumpolyphosphat [(NH₄PO₃)ₙ, n = ca. 1000] als feinkörniges weißes Pulver mit äußerst geringer Wasserlöslichkeit.
- ®Elastan 8009 (Elastogran GmbH, Lemfoerde)
   ein Präpolymer des Diphenylmethan-4,4'-diisocyanats mit einem NCO-Gehalt von 16,4 % und einer Viskosität bei 25 °C von ca. 5000 mPa.s.

### Beispiel 1 (Vergleich)

In einem 2 l-Rührgefäß wurden in 280 ml Wasser 175 g REA-Gips F, 35 g ®Hostaflam AP 462 und 11 g einer 2 %igen Lösung eines handelsüblichen Suspensionsmittels auf Basis eines hochmolekularen Polysaccharids eingerührt und nach ausreichender Homogenisierung mit 350 g ®Elastan 8009 vermischt. Nach einer Rührzeit von 1 - 2 Minuten (bei 1500 - 2000 U/min) wurde die Mischung in eine offene Holzform mir den Abmessungen 20 cm x 20 cm x 40 cm gegossen. Nach einer Ausreaktionszeit von etwa 2 Stunden wurde der Schaumblock aus der Holzform herausgenommen und 24 Stunden bei Raumtemperatur gelagert. Das Raumgewicht des feuchten Schaumblocks (nach Entfernung der Außenhaut) betrug 52 kg/m³; nach Trocknung bei 60 °C bis zur Gewichtskonstanz ging der Wert auf 40 kg/m³ zurück. Daraus wurden in Steigrichtung die Testplatten für den Kleinbrennertest gemäß DIN 53438, Teil 2, gesägt und vor dem Brandtest 48 Std. im Normalklima nach DIN 50014-23/50-2 gelagert. Der Brandtest wurde an Prüfkörpern mit einer Dicke von 13 mm vorgenommen.

Die Testergebnisse sind in Tabeile 1 zusammengefaßt.

Der gipsgefüllte Polyharnstoffschaum hatte folgende Zusammensetzung:
- 31 Masse-%: Calciumsulfat-Dihydrat
- 6 Masse-%: ®Hostaflam AP 462
- 63 Masse-%: Polyharnstoff
- <0,1 Masse-%: Polysaccharid

### Beispiel 2 (Erfindung)

Es wurde analog Beispiel 1 gearbeitet, wobei jedoch 52.5 g ®Hostaflam AP 462 eingesetzt wurden.
Der gipsgefüllte Polyharnstoffschaum hatte folgende Zusammensetzung:
- 30 Masse-%: Calciumsulfat-Dihydrat
- 9 Masse-%: ®Hostaflam AP 462
- 61 Masse-%: Polyharnstoff
- <0,1 Masse-%: Polysaccharid

Die Testergebnisse sind in Tabelle 1 zusammengefaßt.

### Beispiel 3 (Erfindung)

Es wurde analog Beispiel 1 gearbeitet, wobei jedoch 70 g ®Hostaflam AP 462 eingesetzt wurden.
Der gipsgefüllte Polyharnstoffschaum hatte folgende Zusammensetzung:
- 29 Masse-%: Calciumsulfat-Dihydrat
- 12 Masse-%: ®Hostaflam AP 462
- 59 Masse-%: Polyharnstoff
- <0,1 Masse-%: Polysaccharid

Die Testergebnisse sind in Tabelle 1 zusammengefaßt.

### Beispiel 4 (Vergleich)

Es wurde analog Beispiel 1 gearbeitet, wobei jedoch 350 ml Wasser, 210 g REA-Gips F und 26,25 g ®Hostaflam AP 462 eingesetzt wurden.

Der gipsgefüllte Polyharnstoffschaum hatte folgende Zusammensetzung:
- 36 Masse-%: Calciumsulfat-Dihydrat
- 5 Masse-%: ®Hostaflam AP 462
- 59 Masse-%: Polyharnstoff
- <0,1 Masse-%: Polysaccharid

Die Testergebnisse sind in Tabelle 1 zusammengefaßt.

### Beispiel 5 (erfindungsgemäß)

Es wurde analog Beispiel 1 gearbeitet, wobei jedoch 350 ml Wasser, 210 g REA-Gips und 35 g ®Hostaflam AP 462 eingesetzt wurden.
Der gipsgefüllte Polyharnstoffschaum hatte folgende Zusammensetzung:
- 35 Masse-%: Calciumsulfat-Dihydrat
- 6 Masse-%: ®Hostaflam AP 462
- 59 Masse-%: Polyharnstoff
- <0,1 Masse-%: Polysaccharid

Die Testergebnisse sind in Tabelle 1 zusammengefaßt.

### Beispiel 6 (Vergleich)

Es wurde analog Beispiel 1 gearbeitet, wobei jedoch 400 ml Wasser, 245 g REA-Gips F und 26,25 g ®Hostaflam AP 462 eingesetzt wurden.

Der gipsgefülle Polyharnstoffschaum hatte folgende Zusammensetzung:
- 40 Masse-%: Calciumsulfat-Dihydrat
- 4 Masse-%: ®Hostaflam AP 462
- 56 Masse-%: Polyharnstoff
- <0,1 Masse-%: Polysaccharid

Die Testergebnisse sind in Tabelle 1 zusammengefaßt.

### Beispiel 7 (erfindungsgemäß)

Es wurde analog Beispiel 1 gearbeitet, wobei jedoch 400 ml Wasser, 245 g REA-Gips F und 35 g ®Hostaflam AP 462 eingesetzt wurden.

Der gipsgefüllte Polyharnstoffschaum hatte folgende Zusammensetzung:
- 39 Masse-%: Calciumsulfat-Dihydrat
- 6 Masse-%: ®Hostaflam AP 462
- 55 Masse-%: Polyharnstoff
- <0,1 Masse-%: Polysaccharid

Die Testergebnisse sind in Tabelle 1 zusammengefaßt.

### Beispiel 8 (Vergleich)

Es wurde analog Beispiel 1 gearbeitet, wobei jedoch 450 ml Wasser, 280 g REA-Gips F und 8,75 g ®Hostaflam AP 462 eingesetzt wurden.
Der gipsgefüllte Polyharnstoffschaum hatte folgende Zusammensetzung:
- 44 Masse-%: Calciumsulfat-Dihydrat
- 1 Masse-%: ®Hostaflam AP 462
- 55 Masse-%: Polyharnstoff
- <0,1 Masse-%: Polysaccharid

Die Testergebnisse sind in Tabelle 1 zusammengefaßt.

### Beispiel 9 (erfindungsgemäß)

Es wurde analog Beispiel 1 gearbeitet, wobei jedoch 450 ml Wasser, 280 g REA-Gips F und 17.5 g ®Hostaflam AP 462 eingesetzt wurden.

Der gipsgefüllte Polyharnstoffschaum harte folgende Zusammensetzung:
- 43 Masse-%: Calciumsulfat-Dihydrat
- 3 Masse-%: ®Hostaflam AP 462
- 54 Masse-%: Polyharnstoff
- <0,1 Masse-%: Polysaccharid

Die Testergebnisse sind in Tabelle 1 zusammengefaßt.

### Beispiel 10 (erfindungsgemäß)

Es wurde analog Beispiel 1 gearbeitet, wobei jedoch 450 ml Wasser, 350 g REA-Gips F und 8,75 g ®Hostaflam AP 462 eingesetzt wurden.

Der gipsgefüllte Polyharnstoffschaum hatte folgende Zusammensetzung:
- 50 Masse-%: Calciumsulfat-Dihydrat
- 1 Masse-%: ®Hostaflam AP 462
- 49 Masse-%: Polyharnstoff
- <0.1 Masse-%: Polysaccharid

Die Testergebnisse sind in Tabelle 1 zusammengefaßt.

### Beispiel 11 (erfindungsgemäß)

Es wurde analog Beispiel 1 gearbeitet, wobei jedoch 450 ml Wasser, 350 g REA-Gips F und 17,5 g ®Hostaflam AP 462 eingesetzt wurden.

Der gipsgefüllte Polyharnstoffschaum hatte folgende Zusammensetzung:
- 49 Masse-%: Calciumsulfat-Dihydrat
- 2 Masse-%: ®Hostaflam AP 462
- 49 Masse-%: Polyharnstoff
- <0,1 Masse-%: Polysaccharid

Die Testergebnisse sind in Tabelle 1 zusammengefaßt.

### Beispiel 12 (erfindungsgemäß)

Es wurde analog Beispiel 1 gearbeitet, wobei jedoch 450 ml Wasser, 350 g REA-Gips F, 17,5 g ®Hostaflam AP 462 und 2 g Zellstoffasern eingesetzt wurden.

Der gipsgefüllte Polyharnstoffschaum hatte folgende Zusammensetzung;
- 49 Masse-%: Calciumsulfat-Dihydrat
- 2 Masse-%: ®Hostaflam AP 462
- 48 Masse-%: Polyharnstoff
- 0,3 Masse-%: Zellstoffasern
- <0,1 Masse-%: Polysaccharid

Die Testergebnisse sind in Tabelle 1 zusammengefaßt.

### Beispiel 13 (erfindungsgemäß)

Es wurde analog Beispiel 1 gearbeitet, wobei jedoch 450 ml Wasser, 385 g REA-Gips F und 8.75 g ®Hostaflam AP 462 eingesetzt wurden.

Der gipsgefüllte Polyharnstoffschaum hatte folgende Zusammensetzung;
- 52 Masse-%: Calciumsulfat-Dihydrat
- 1 Masse-%: ®Hostaflam AP 462
- 47 Masse-%: Polyharnstoff
- <0,1 Masse-%: Polysaccharid

Die Testergebnisse sind in Tabelle 1 zusammengefaßt.

### Beispiel 14 (erfindungsgemäß)

Es wurde analog Beispiel 1 gearbeitet, wobei jedoch 450 ml Wasser, 420 g REA-Gips F und 8,75 g ®Hostaflam AP 462 eingesetzt wurden.

Der gipsgefüllte Polyharnstoffschaum hatte folgende Zusammensetzung:
- 54 Masse-%: Calciumsulfat-Dihydrat
- 1 Masse-%: ®Hostaflam AP 462
- 45 Masse-%: Polyharnstoff
- <0,1 Masse-%: Polysaccharid

Die Testergebnisse sind in Tabelle 1 zusammengefaßt.

### Beispiel 15 (erfindungsgemäß)

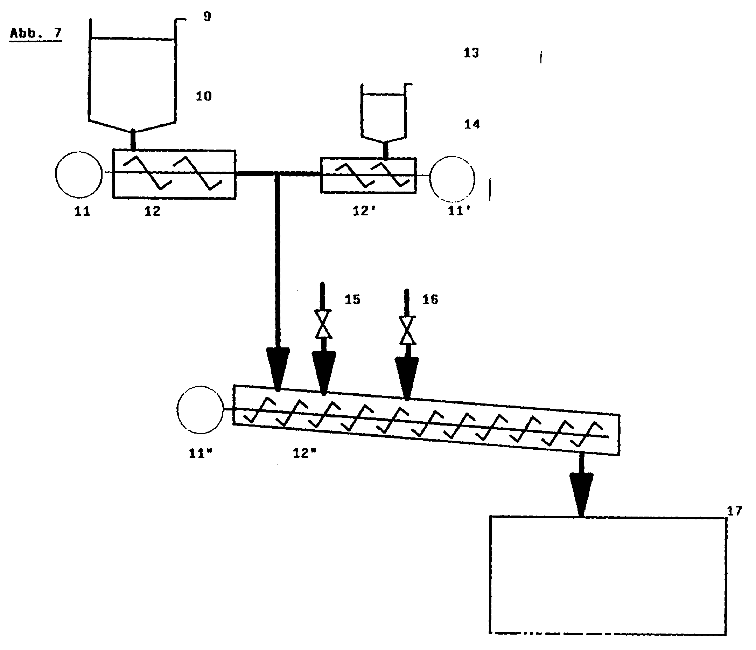

In einer in Abb. 7 schematisch dargestellten Anlage wurden bei Raumtemperatur
- 90 kg: REA-Gips F
- 11 kg: ®Hostaflam AP 462
- 35 kg: ®Elastan 8009
- 60 kg: Wasser
gemischt und in eine nicht gasdicht geschlossene Stahlform mit den Abmessungen 1,6 m x 1,0 m x 1,0 m eingebracht, wobei nach einigen Minuten infolge Bildung von Kohlendioxid ein Schaumbildungsvorgang einsetzte. Nach Beendigung des Schäumvorgangs wurde der erhaltene feste Block in ca. 50 mm-dicke Plattenscheiben aufgesägt, die im Warmluftstrom bei ca. 60 °C getrocknet wurden.

An den Schaumplatten, die ein Raumgewicht von 79,9 kg/m³ aufwiesen, wurden folgende Werte ermittelt:

| | | |
|---|---|---|
| Sauerstoffindex | (ASTM-D2863) | 0,41 |
| Wärmeleitfähigkeit | (DIN 52612) | 0,048 W/m . K |
| Offenzelligkeit | (ASTM-D2856/87) | 98,3 % |

Der gipsgefüllte Polyharnstoffschaum hatte folgende Zusammensetzung:
- 66 Masse-%: Calciumsulfat-Dihydrat
- 8 Masse-%: ®Hostaflam AP 462
- 26 Masse-%: Polyharnstoff.

Die bei der Prüfung auf Schwerentflammbarkeit gemäß DIN 4102 erhaltenen Testergebnisse sind in Tabelle 2 zusammengefaßt:

### Beispiel 16 (erfindungsgemäß)

Es wurde analog Beispiel 14 gearbeitet, wobei jedoch mit folgenden Einsatzstoffen gearbeitet wurde:
- 90 kg: REA-Gips F
- 11 kg: ®Hostaflam AP 462
- 35 kg: ®Elastan 8009
- 65 kg: Wasser, in dem 45 g eines handelsüblichen Suspensionsmittels auf Basis eines hochmolekularen Polysaccharids gelöst worden waren.

Aus den getrockneten, 49 mm dicken Schaumplatten, die ein Raumgewicht von 89,6 kg/m³ aufwiesen, wurden Probekörper für die Prüfung auf Schwerentflammbarkeit gemäß DIN 4102 gesägt, die im Normalklima (DIN 50014-23/50-2) bis zur Gewichtskonstanz gelagen wurden.

Die Testergebnisse sind in Tabelle 2 zusammengefaßt.

Der gipsgefüllte Polyharnstoffschaum hatte folgende Zusammensetzung:
- 66 Masse-%: Calciumsulfat-Dihydrat
- 8 Masse-%: ®Hostaflam AP 462
- 26 Masse-%: Polyharnstoff.
- <0,1 Masse-%: Polysaccharid

### Beispiel 17 (erfindungsgemäß)

Es wurde analog Beispiel 14 gearbeitet, wobei jedoch mit folgenden Einsatzstoffen gearbeitet wurde:
- 90 kg: REA-Gips H
- 11 kg: ®Hostaflam AP 462
- 36 kg: ®Elastan 8009
- 65 kg: Wasser

Aus den getrockneten, 48 mm dicken Schaumplatten, die ein Raumgewicht von 85,6 kg/m³ aufwiesen, wurden Probekörper für die Prüfung auf Schwerentflammbarkeit gemäß DIN 4102 gesägt, die im Normalklima (DIN 50014-23/50-2) bis zur Gewichtskonstanz gelagert wurden.

Die Testergebnisse sind in Tabelle 2 zusammengefaßt.

Der gipsgefüllte Polyharnstoffschaum hatte folgende Zusammensetzung:
- 66 Masse-%: Calciumsulfat-Dihydrat
- 8 Masse-%: ®Hostaflam AP 462
- 26 Masse-%: Polyharnstoff.

### Beispiel 18 (Vergleich)

In der DE 39 09 083 C1 "Gipsschaumstoff mit poriger Struktur, Verfahren zu seiner Herstellung und seine Verwendung" findet sich in Spalte 3, Zeilen 47 - 50, der Hinweis, daß "als Gips bei der vorliegenden Erfindung alle neutral oder schwach sauer reagierenden, hydraulisch abbindenden Calciumsulfat-Modifikationen ... eingesetzt werden können". Bei der Nacharbeitung der Beispiele 1 und 2 wurde folgendes festgestellt:
* Bei der Vermischung von 360 g Stuckgips, 89,3 g Wasser, 89,3 g ®Elastan 8009 und 2,4 g ®Sapogenat T-040 gemäß Beispiel 1 wurde kein Schäumvorgang beobachtet und ein grauweißes, steinartiges Produkt erhalten, das keinerlei porige Struktur aufwies.
   Nach einer Lagerzeit von 24 Stunden bei Raumtemperatur wies das Produkt ein Raumgewicht von 1190 kg/m³ auf. Nach Trocknen bei 60 °C bis zur Gewichtskonstanz wurde ein Raumgewicht von 1125 kg/m³ ermittelt.
   [Anmerkung: Die Trocknung ist ein Verfahrensschritt, der in der DE 39 09 083 nicht vorgesehen ist.]
* Bei der Vermischung von 360 g Stuckgips, 119,2 g Wasser, 72,4 g ®Elastan 8009 und 2,4 g ®Sapogenat T-040 gemäß Beispiel 2 wurde kein Schäumvorgang beobachtet und ebenfalls ein grauweißes, steinartiges Produkt erhalten, das keinerlei porige Struktur aufwies.
   Nach einer Lagerzeit von 24 Stunden bei Raumtemperatur wurde ein Raumgewicht von 1030 kg/m³ gemessen, das nach Trocknen bei 60 °C bis zur Gewichtskonstanz auf 930 kg/m³ zurückging.

Um sicherzustellen, daß die Nichtverwendbarkeit von Calciumsulfat-Semihydrat nicht auf die Mengenverhältnisse der Beispiele 1 und 2 beschränkt ist, wurden weitere Versuche mit höherer Wassermenge sowie mit erhöhter Wassermenge und erhöhter Isocyanat-Präpolymermenge durchgeführt.
* analog Beispiel 2, doppelte Wassermenge
   Bei der Vermischung von 360 g Stuckgips, 238,4 g Wasser, 72,4 g ®Elastan 8009 und 2,4 g ®Sapogenat T-040 wurde kein Schäumvorgang beobachtet und ein grauweißes, steinartiges Produkt erhalten, das keine porige Struktur aufwies. Nach einer Lagerzeit von 24 Stunden bei Raumtemperatur wurde ein Raumgewicht von 1280 kg/m³ ermittelt, das sich nach Trocknung bis zur Gewichtskonstanz bei 60 °C auf 970 kg/m³ verringerte.
* analog Beispiel 2, vierfache Wassermenge
   Bei der Vermischung von 360 g Stuckgips, 476,8 g Wasser, 72,4 g ®Elastan 8009 und 2,4 g ®Sapogenat T-040 wurde kein Schäumvorgang beobachtet und ein grauweißes, steinartiges Produkt erhalten, das praktisch keine porige Struktur aufwies. Nach einer Lagerzeit von 24 Stunden bei Raumtemperatur lag das Raumgewicht bei 1120 kg/m³, das nach Trocknung bis zur Gewichtskonstanz bei 60 °C auf 620 kg/m³ zurückging.
* analog Beispiel 2, doppelte Wassermenge, doppelte Isocyanat-Präpolymermenge
   Bei der Vermischung von 360 g Stuckgips, 238,4 g Wasser, 144,8 g ®Elastan 8009 und 2,4 g ®Sapogenat T-040 wurde kein kein Schäumvorgang beobachtet und ein grauweißes, steinartiges Produkt erhalten, das eine nur schwach ausgeprägte, porige Struktur aufwies. Nach einer Lagerzeit von 24 Stunden bei Raumtemperatur lag das Raumgewicht bei 660 kg/m³, das nach Trocknung bis zur Gewichtskonstanz bei 60 °C auf 470 kg/m³ zurückging.

Wie aus den obigen Vergleichsbeispielen hervorgeht, konnten in keinem Fall Gipsschaumstoffe mit einem Raumgewicht von 100 bis 400 kg/m³ hergestellt werden. Daher sind die Aussagen der DE-PS 39 09 083, daß hydraulisch abbindende Calciumsulfat-Modifikationen einsetzbar und Raumgewichtsbereiche von 100 bis 400 kg/m³ (entspricht 0,1 bis 0,4 g/cm³) realisierbar sind sowie der erfindungsgemäße Gipsschaumstoff offenzellig ist, nicht zutreffend.

Eine Röntgenanalyse von unterschiedlichen Gipssorten ist in den Abbildungen 1 bis 3 wiedergegeben. Alle Aufnahmen erfolgten mit einem automatischen Pulverdiffraktometer (Modell APD 1700) der Fa. Philips, Kassel (DE). In allen drei Abbildungen ist auf der x-Achse die relative Intensität der Reflexe und auf der y-Achse der Beugungswinkel (CuK_{α}-Strahlung) angegeben.

In Abbildung 1 steht das Bezugszeichen (1) für das Röntgendiffraktogramm von REA-Gips F (Gips aus der Rückgasentschwefelungsanlage des Kraftwerks Frauenaurach (DE), während die Röntgendiffraktogramme von Calciumsulfat-Dihydrat (CaSO₄ x 2 H₂O) mit (2), von Calciumsulfat-Semihydrat (CaSO₄ x 1/2 H₂O) mit (3) und von Calciumsulfat-Anhydrid (CaSO₄) mit (4) gekennzeichnet sind.

Entsprechend ist in Abbildung 2 das Röntgendiffraktogramm (5) von REA-Gips H (Gips aus der Rauchgasentschwefelungsanlage des Kraftwerks Heilbronn (DE) wiedergegeben, wobei sich die Bezugsziffern (2), (3) und (4) wie in Abbildung 1 auf die verschiedenen CaSO₄-Typen beziehen.

Abbildung 3 zeigt das Röntgendiffraktogramm (6) von Stuckgips der Fa. Gebr. Knauf, Werk Neuss (DE) im Vergleich zu den bereits erwähnten CaSO₄-Typen.

Die Ergebnisse der thermogravimetrischen Analyse von unterschiedlichen Gipssorten ist in den Abbildungen 4 bis 6 wiedergegeben. Alle Analysen erfolgten mit einem Simultan-Thermoanalyse-Gerät (Modell 409 C) der Fa. Netsch, Selb (DE). In den Abbildungen 4 bis 6 sind auf der x-Achse (links) die Masse-% und (rechts) der Wärmegrad in (µV) angegeben, während die y-Achse die Temperatur in °C wiedergibt. Die Kurve (7) steht jeweils für differentielle Thermo-Analyse (DSC) und die Kurve (8) für die Thermogravimetrie (TG).

Dabei gibt Abbildung 4 die thermogravimetrische Analyse von REA-Gips aus dem Kraftwerk Frauenaurach, Abbildung 5 die thermogravimetrische Analyse von REA-Gips aus dem Kraftwerk Heilbronn (jeweils aus der vorgenannten Rauchgasentschwefelungsanlage) und Abbildung 6 die thermogravimetrische Analyse von Stuckgips der Fa. Gebr. Knauf, Werk Neuss (DE) wieder.

Abbildung 7 schließlich zeigt eine Vorrichtung zur Herstellung von halogenfreiem und füllstoffhaltigem, flammwidrigem Polyharnstoffschaum, in der Gips (10) aus einem Behälter (9) über eine motorgetriebene Schnecke (11, 12) und das Flammschutzmittel (13) aus einem Behälter (14), ebenfalls über eine motorgetriebene Schnecke (11', 12'), auf eine weitere motorgetriebene Schnecke (11'', 12'') gegeben werden und anschließend über Dosiereinheiten (15) Wasser und (16) Isocyanatpräpolymer zugegeben werden. Anschließend wird die gesamte Mischung in der Form (17) geschäumt.

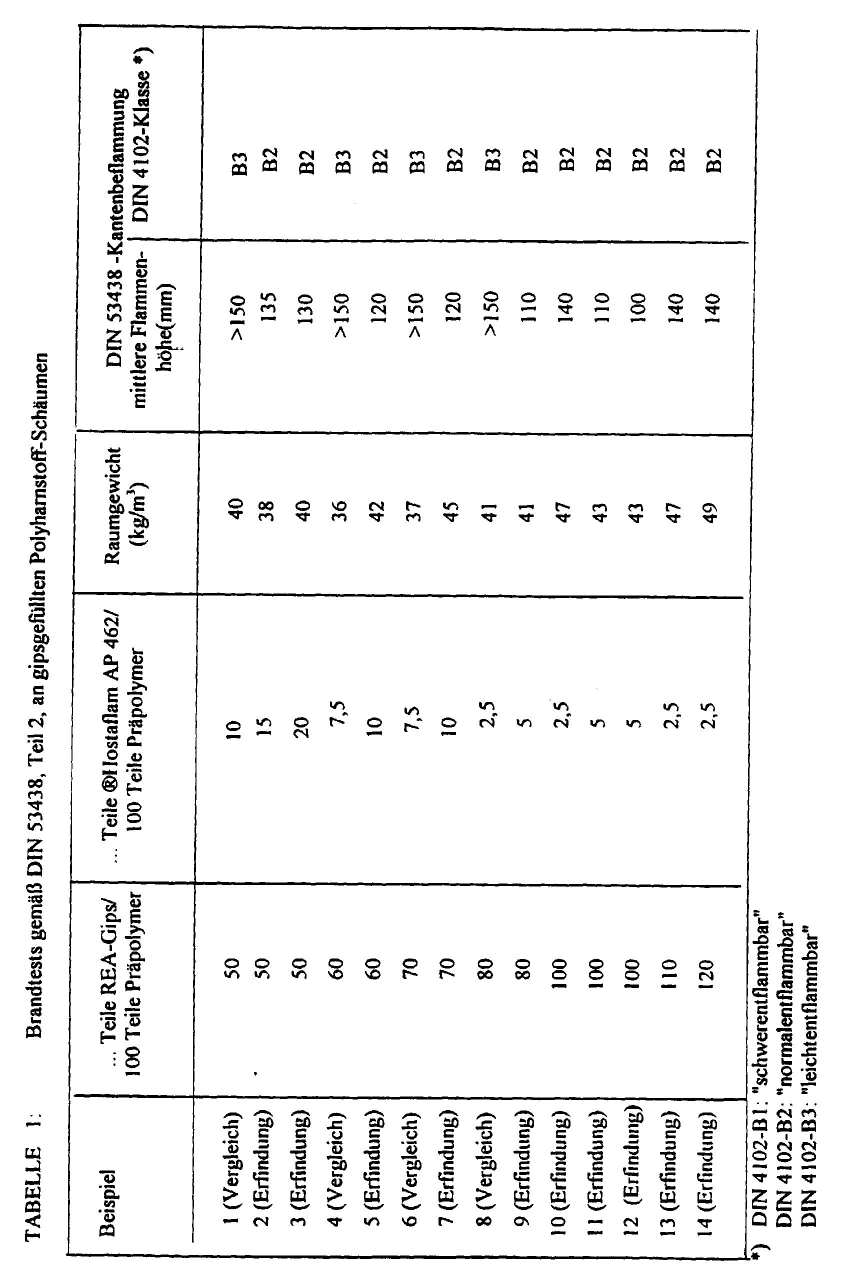

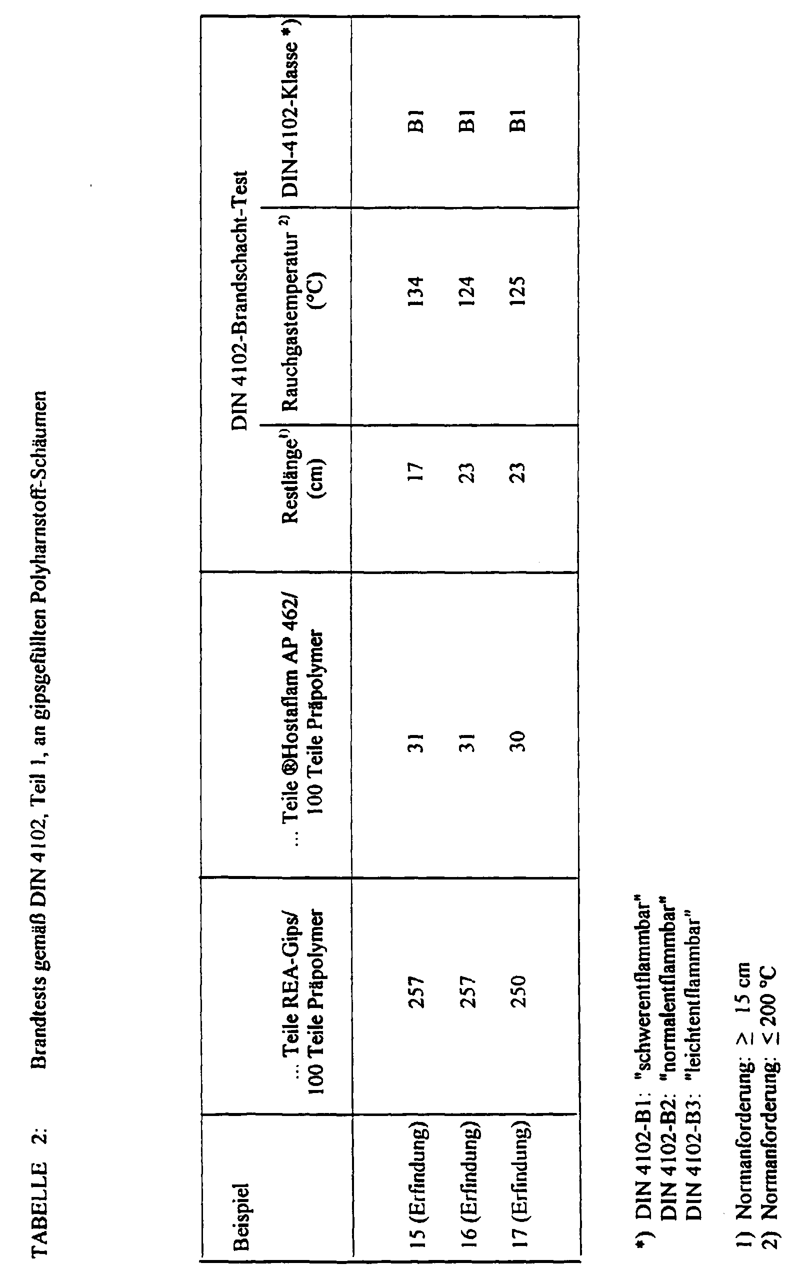

## Patentansprüche

1. Flammwidriger Polyharnstoff-Schaum, dadurch gekennzeichnet, daß
- er Calciumsulfat-Dihydrat enthält,
- er als Flammschutzmittel Ammoniumpolyphosphat, ggf. in Kombination mit weiteren halogenfreien Flammschutzmitteln und/ oder halogenfreien Synergisten enthält,
- sein Raumgewicht 25 bis 250 kg/m³ beträgt,
- die Zahl seiner offenen Zellen über 80 % seiner gesamten Zellen beträgt,
- der Polyharnstoff aus einer Reaktion von Präpolymeren des Diphenylmethan-4,4'-diisocyanats mit Wasser gebildet worden ist.

2. Polyharnstoff-Schaum nach Anspruch 1, dadurch gekennzeichnet, daß er Calciumsulfat-Dihydrat in Form von Naturgips oder Chemiegips enthält.

3. Polyharnstoff-Schaum nach Anspruch 1 oder 2, dadurch gekennzeichnet, daß er als Flammschutzmittel ein freifließendes, pulverförmiges, in Wasser schwerlösliches Ammoniumpolyphosphat der Formel (NH₄PO₃)ₙ mit n = 20 bis 1000, vorzugsweise 500 bis 1000, enthält.

4. Polyharnstoff-Schaum nach Anspruch 3, dadurch gekennzeichnet, daß das Ammoniumpolyphosphat mikroverkapselt ist und 0,5 bis 25 Masse-% eines wasserunlöslichen, ggf. gehärteren Kunstharzes, welches die einzelnen Ammoniumpolyphosphatteilchen umhüllt, enthält.

5. Polyharnstoff-Schaum nach einem der vorhergehenden Ansprüche, dadurch gekennzeichnet, daß sein Raumgewicht 35 bis 90 kg/m³ beträgt.

6. Polyharnstoff-Schaum nach einem der vorhergehenden Ansprüche, gekennzeichnet durch folgende Zusammensetzung (Masse-%):
a) 15 bis 70 %, vorzugsweise 20 bis 60 %, Polyharnstoff,
b) 25 bis 80 %, vorzugsweise 30 bis 70 %, Calciumsulfat-Dihydrat,
c) 1 bis 15 %, vorzugsweise 2 bis 10 %, Flammschutzmittel,
und gegebenenfalls
d) 0,1 bis 5 %, vorzugsweise 0,2 bis 2 %, faserförmige Füllstoffe,
e) 0,1 bis 2 % Katalysatoren auf Basis von Stickstoffverbindungen für die Isocyanat/Wasser-Reaktion,
f) 0,1 bis 2 % Schaumstabilisatoren auf Basis von Polysiloxanen,
g) 0,01 bis 2 % Hilfsmittel für die Dispergierung und/oder Suspendierung und/oder Thixotropierung.

7. Verfahren zur Herstellung des Polyharnstoff-Schaums gemäß einem der vorhergehenden Ansprüche, dadurch gekennzeichnet, daß man Calciumsulfat-Dihydrat, Flammschutzmittel, Präpolymere des Diphenylmethan-4,4'-diisocyanats, Wasser und ggf. faserförmige Füllstoffe, Katalysatoren, Schaumstabilisatoren sowie Dispergier- und/oder Suspendier- und/oder Thixotropierhilfsmittel vermischt, wobei infolge Bildung von Kohlendioxid die Verschäumung abläuft, und daß man den ausgehärteten Schaum auf einen Restfeuchtegehalt von unter 2 % bringt.

8. Verfahren nach Anspruch 7, dadurch gekennzeichnet, daß man
15 bis 60 Masse-% Calciumsulfat-Dihydrat,
15 bis 45 Masse-% Präpolymere des Diphenylmethan-4,4'-diisocyanats,
25 bis 50 Masse-% Wasser,
0,5 bis 10 Masse-% Flammschutzmittel,
und gegebenenfalls
0,1 bis 5 Masse-% faserförmige Füllstoffe,
0,1 bis 2 Masse-% Katalysatoren auf Basis von Stickstoffverbindungen für die Isocyanat/Wasser-Reaktion,
0,1 bis 2 Masse-% Schaumstabilisatoren auf Basis von Polysiloxenen und
0,01 bis 2 Masse-% Dispergier- und/oder Suspendier- und/oder Thixotropierhilfsmittel
vermischt.

9. Verwendung des Polyharnstoff-Schaums gemäß einem der Ansprüche 1 bis 6 als Blockschaum oder Ortschaum für Schall- und/oder Wärmedämmungen.

## Claims

1. Flame-resistant polyurea foam characterized in that
- it contains calcium sulphate dihydrate,
- it contains, as flame retardant, ammonium polyphosphate, if desired in combination with further halogen-free flame retardants and/or halogen-free synergists,
- it has a bulk density of from 25 to 250 kg/m³,
- it has a number of open cells which is above 80% of all its cells,
- it comprises polyurea which has been formed from a reaction of prepolymers of diphenylmethane 4,4'-diisocyanate with water.

2. Polyurea foam according to Claim 1, characterized in that it contains calcium sulphate dihydrate in the form of natural gypsum or chemical gypsum.

3. Polyurea foam according to Claim 1 or 2, characterized in that it contains, as flame retardant, a free-flowing, pulverulent ammonium polyphosphate of the formula (NH₄PO₃)ₙ having n = 20 to 1000, preferably from 500 to 1000, which is sparingly soluble in water.

4. Polyurea foam according to Claim 3, characterized in that the ammonium polyphosphate is microencapsulated and contains from 0.5 to 25% by mass of a water-insoluble, if desired cured, synthetic resin which encloses the individual ammonium polyphosphate particles.

5. Polyurea foam according to any one of the preceding claims, characterized in that it has a bulk density of from 35 to 90 kg/m³.

6. Polyurea foam according to any one of the preceding claims, characterized in that it has the following composition (% by mass):
a) from 15 to 70%, preferably from 20 to 60%, of polyurea,
b) from 25 to 80%, preferably from 30 to 70%, of calcium sulphate dihydrate,
c) from 1 to 15%, preferably from 2 to 10%, of flame retardant,
and, if desired,
d) from 0.1 to 5%, preferably from 0.2 to 2%, of fibrous fillers,
e) from 0.1 to 2% of catalysts based on nitrogen compounds for the isocyanate/water reaction,
f) from 0.1 to 2% of foam stabilizers based on polysiloxanes,
g) from 0.01 to 2% by weight of auxiliaries for dispersion and/or suspension and/or making thixotropic.

7. Process for producing the polyurea foam according to any one of the preceding claims, characterized in that it comprises mixing calcium sulphate dihydrate, flame retardant, prepolymers of diphenylmethane 4,4'-diisocyanate, water and, if desired, fibrous fillers, catalysts, foam stabilizers and also dispersants and/or suspending agents and/or thixotropes, with the foaming proceeding as a result of the formation of carbon dioxide, and bringing the cured foam to a residual moisture content of below 2%.

8. Process according to Claim 7, characterized in that
from 15 to 60% by mass of calcium sulphate dihydrate,
from 15 to 45% by mass of prepolymers of diphenylmethane 4,4'-diisocyanate,
from 25 to 50% by mass of water,
from 0.5 to 10% by mass of flame retardant,
and, if desired,
from 0.1 to 5% by mass of fibrous fillers,
from 0.1 to 2% by mass of catalysts based on nitrogen compounds for the isocyanate/water reaction,
from 0.1 to 2% by mass of foam stabilizers based on polysiloxanes and
from 0.01 to 2% by mass of dispersants and/or suspending agents and/or thixotropes,
are mixed.

9. Use of the polyurea foam according to any one of Claims 1 to 6 as block foam or in-situ foam for sound and/or heat insulation.

## Revendications

1. Mousse de polyurée résistante à la flamme, caractérisée en ce que
- elle contient du sulfate de calcium dihydraté,
- elle contient, en tant qu'ignifugeant, du polyphosphate d'ammonium, éventuellement en association avec d'autres ignifugeants exempts d'halogènes et/ou des agents synergiques exempts d'halogènes,
- sa masse volumique va de 25 à 250 kg/m³,
- le nombre de ses cellules ouvertes représente plus de 80 % du nombre total de ses cellules,
- la mousse de polyurée a été formée par une réaction de prépolymères du diphénylméthane-4,4'-diisocyanate avec de l'eau.

2. Mousse de polyurée selon la revendication 1, caractérisée en ce qu'elle contient du sulfate de calcium dihydraté sous forme de gypse naturel ou de gypse chimique.

3. Mousse de polyurée selon la revendication 1 ou 2, caractérisée en ce qu'elle contient, en tant qu'ignifugeant, un polyphosphate d'ammonium pulvérulent, s'écoulant librement, à faible solubilité dans l'eau, de formule (NH₄PO₃)ₙ où n = 20 à 1 000, de préférence 500 à 1 000.

4. Mousse de polyurée selon la revendication 3, caractérisée en ce que le polyphosphate d'ammonium est microencapsulé et contient de 0,5 à 25 % en masse d'une résine synthétique insoluble dans l'eau, éventuellement durcie, qui enveloppe les particules de polyphosphate d'ammonium individuelles.

5. Mousse de polyurée selon l'une des revendications précédentes, caractérisée en ce que sa masse volumique va de 35 à 90 kg/m³.

6. Mousse de polyurée selon l'une des revendications précédentes, caractérisée par la composition suivante (en % en masse):
a) 15 à 70 %, de préférence 20 à 60 %, de polyurée,
b) 25 à 80 %, de préférence 30 à 70 %, de sulfate de calcium dihydraté,
c) 1 à 15 %, de préférence 2 à 10 %, d'ignifugeant,
et éventuellement
d) 0,1 à 5 % de préférence 0,2 à 2 %, de charges fibreuses,
e) 0,1 à 2 % de catalysateurs à base de composés azotés, pour la réaction isocyanate-eau,
f) 0,1 à 2 % de stabilisants de mousse, à base de polysiloxanes,
g) 0,01 à 2 % d'adjuvant pour la dispersion et/ou la mise en suspension et/ou la thixotropie.

7. Procédé pour la fabrication de la mousse de polyurée selon l'une des revendications précédentes, caractérisé en ce que l'on mélange du sulfate de calcium dihydraté, un ignifugeant, des prépolymères du diphénylméthane-4,4'-diisocyanate, de l'eau et éventuellement des charges fibreuses, des catalyseurs, des stabilisants de mousse ainsi que des adjuvants de dispersion et/ou de mise en suspension et/ou de thixotropie, l'expansion se déroulant par suite de la formation de dioxyde de carbone, et en ce que l'on porte la mousse durcie à une teneur en humidité résiduelle inférieure à 2 %.

8. Procédé selon la revendication 7, caractérisé en ce que l'on mélange
15 à 60 % en masse de sulfate de calcium dihydraté,
15 à 45 % en masse de prépolymères du diphénylméthane-4,4'-diisocyanate,
25 à 50 % en masse d'eau,
0,5 à 10 % en masse d'ignifugeant,
et éventuellement
0,1 à 5 % en masse de charges fibreuses,
0,1 à 2 % en masse de catalyseurs à base de composés azotés pour la réaction isocyanate/eau,
0,1 à 2 % en masse de stabilisants de mousse à base de polysiloxanes et
0,01 à 2 % en masse d'adjuvants de dispersion et/ou de mise en suspension et/ou de thixotropie.

9. Utilisation de la mousse de polyurée selon l'une des revendications 1 à 6, en tant que mousse en bloc ou mousse in situ pour isolations thermiques et/ou acoustiques.
